# FASCICULE DE BREVET EUROPEEN

(11) **EP 2 688 138 B1**
(45) Date de publication et mention de la délivrance du brevet: **24.08.2016**
(21) Numéro de dépôt: 13176693.3
(22) Date de dépôt: 16.07.2013
(51) Int. Cl.: H01Q 25/00, H01P 1/213

(54) **Antenne et système d'antennes multifaisceaux comportant des sources compactes et système de télécommunication par satellite comportant au moins une telle antenne**
Mehrfachstrahlantenne und -antennensystem, das kompakte Quellen umfasst, und Satellitentelekommunikationssystem das mindestens eine Antenne dieser Art umfasst
Antenna and multi-beam antenna system comprising compact sources and satellite telecommunication system comprising at least one such antenna

(30) Priorité: 20.07.2012 FR 1202060
(43) Date de publication de la demande: 22.01.2014
(73) Titulaire: Thales, 92400 Courbevoie (FR)
(72) Inventeur: Bosshard, Pierre, 31170 TOURNEFEUILLE (FR); Lepeltier, Philippe, 31320 CASTANET TOLOSAN (FR); Pressense, Judicaël, 31500 TOULOUSE (FR); Charrat, Bernard, 31037 TOULOUSE (FR)
(74) Mandataire: Nguyen, Dominique

(56) Documents cités:
- EP-A1- 0 224 917
- EP-A1- 2 429 036
- FR-A1- 2 765 421
- US-A- 6 157 811

## Description

La présente invention concerne une antenne et un système d'antennes multifaisceaux à plusieurs sources par faisceau MFPB (en anglais Multiple Feed Per Beam Antenna) comportant des sources compactes et un système de télécommunication par satellite comportant au moins une telle antenne. Elle s'applique notamment au domaine des télécommunications par satellite et en particulier à l'optimisation des ressources d'un satellite par réutilisation de fréquence dans un schéma dit à quatre couleurs.

Les antennes multifaisceaux considérées sont composées d'au moins un réflecteur, par exemple un paraboloïde asymétrique à alimentation décalée par rapport aux faisceaux rayonnés appelé paraboloïde offset, et d'un réseau de sources primaires placées au foyer du réflecteur. Chaque source primaire est constituée d'un élément rayonnant, par exemple de type cornet ou de tout autre type connu, et d'une chaîne radiofréquence RF alimentant l'élément rayonnant.

Dans le cas classique, la chaîne radiofréquence comporte deux ports de sortie et à chaque source du réseau focal correspond un faisceau fin rayonné par l'antenne et une zone de couverture au sol appelée spot. Il est possible d'obtenir un rayonnement de l'antenne par faisceaux multiples si les faisceaux élémentaires sont découplés les uns par rapport aux autres, le découplage pouvant être spatial ou obtenu par l'utilisation de polarisations orthogonales ou de fréquences différentes entre deux faisceaux adjacents. Les lois géométriques permettent de projeter les couvertures terrestres souhaitées dans le plan focal de l'antenne et de positionner correctement le centre de phase de chaque source primaire correspondant à chaque spot. Lorsque la couverture est composée de spots régulièrement disposés au sol, l'écart entre deux spots adjacents impose directement l'espace séparant deux sources adjacentes dans le plan focal.

Il est connu du document EP0224917 de réaliser une source à quatre ports de sortie en utilisant un diplexeur associé à un polariseur.

L'élaboration d'un grand nombre de faisceaux fins contigus implique de réaliser une antenne comportant un grand nombre d'éléments rayonnants élémentaires, placés dans le plan focal d'un réflecteur parabolique comme décrit dans le document US 6157811. Dans le cas d'une antenne classique en configuration SFPB (en anglais : Single Feed Per Beam) correspondant à une source par faisceau, le volume alloué pour l'emplacement d'une chaîne radiofréquence RF chargée d'assurer les fonctions d'émission et de réception en bipolarisation circulaire est borné par la surface radiative d'un élément rayonnant.

Dans cette configuration où chaque source, constituée d'un élément rayonnant couplé à une chaîne radiofréquence comportant un port d'émission et un port de réception, élabore un faisceau, chaque faisceau formé est émis par exemple par un cornet dédié constituant l'élément rayonnant élémentaire et la chaîne radiofréquence réalise, pour chaque faisceau, les fonctions émission/réception en mono-polarisation dans une bande de fréquences choisie en fonction des besoins des utilisateurs. Pour obtenir une bonne efficacité de rayonnement des spots, les cornets des réseaux rayonnants doivent bénéficier d'un espace suffisant leur permettant d'être suffisamment directifs afin d'éclairer le bord des réflecteurs avec des niveaux suffisamment bas et permettre ainsi de limiter les pertes par débordement (en anglais : spill over). Les spots étant entrelacés, l'espace entre deux sources d'une antenne peut ne pas être compatible avec les dimensions physiques des cornets pour atteindre les performances radiofréquence souhaitées. Par exemple cela est le cas pour des tailles de spots inférieures à 1°. Pour résoudre ce problème, il est généralement choisi d'utiliser trois ou quatre antennes différentes qui réalisent chacune un tiers, ou respectivement un quart de la couverture. Ainsi, deux spots adjacents de la couverture ne sont pas réalisés par la même antenne. Lorsqu'il n'y a pas de contrainte d'aménagement du réseau d'antennes, cette configuration permet généralement d'obtenir des performances d'antennes très efficaces. Cependant, lorsque le diamètre des faisceaux diminue, les contraintes géométriques augmentent et il n'est pas possible d'avoir un espace suffisant pour implanter chaque cornet malgré le partage de la couverture sur trois ou quatre antennes. Pour des spots très fins de taille comprise entre 0,2° et 0,4°, l'espace alloué à chaque source du réseau focal devient très faible et le réflecteur est vu par chaque source du réseau focal sous un angle sous-tendu ne permettant pas aux sources de produire la directivité suffisante pour éviter les pertes par débordement.

Une deuxième configuration d'antenne permettant d'élaborer un grand nombre de faisceaux fins contigus est d'utiliser un système de deux antennes en configuration MFPB (en anglais : Multiple Feed Per Beam) utilisant plusieurs sources par faisceau. Généralement, la première antenne Tx fonctionne à l'émission, la seconde antenne Rx fonctionne à la réception, et pour chaque antenne, chaque faisceau est formé en combinant les signaux issus de plusieurs sources élémentaires adjacentes, certaines de ces sources étant réutilisées pour élaborer des faisceaux contigus. Une efficacité de rayonnement satisfaisante est obtenue grâce à la réutilisation des sources qui participent à la formation de plusieurs faisceaux, ce qui permet d'augmenter la surface radiative allouée à chaque faisceau et de diminuer les pertes par débordement. Lorsque les sources sont partagées entre plusieurs faisceaux de même fréquence et de même polarisation, il est possible de créer une condition d'indépendance entre les faisceaux partageant des éléments rayonnants en imposant la formation de lois dites orthogonales. L'orthogonalité est réalisée en utilisant des coupleurs directifs qui isolent deux à deux les circuits de distribution d'un réseau de formation de faisceaux BFN (en anglais : Beam Forming Network) qui partagent les mêmes éléments rayonnants. Cependant, les contraintes d'orthogonalité provoquent une déformation des diagrammes de rayonnement des antennes et une augmentation des pertes ohmiques des circuits de recombinaison liée à la complexité des circuits de distribution. Les pertes cumulées sont souvent importantes, c'est-à-dire de l'ordre de 1dB. En outre, il est nécessaire de limiter la complexité des formateurs de faisceau à un taux de réutilisation de deux éléments rayonnants par spot. Ceci conduit à séparer physiquement les circuits de combinaison de deux faisceaux adjacents d'une distance correspondant à deux éléments rayonnants adjacents. Pour des spots ayant un écart angulaire compris entre 0.2° et 0.3°, la longueur focale apparente peut être très importante, par exemple de l'ordre de 10 mètres. Enfin, la réutilisation des sources lors de l'élaboration de deux faisceaux adjacents présente des inconvénients majeurs liés à l'encombrement des circuits de combinaison, à la masse du formateur de faisceau et à la complexité de la formation des lois d'amplitude et de phase de chaque antenne. En effet, pour une réutilisation de deux sources par polarisation, le nombre de chaînes radiofréquence RF élémentaires augmente d'un facteur supérieur à quatre avec le nombre de spots à former. Ainsi, pour 100 spots, il faut un nombre de chaînes radiofréquence RF supérieur à 400 éléments rayonnants ce qui nécessite une surface dans le plan focal, de l'ordre de 500mm*500mm. La masse et le volume du formateur de faisceaux deviennent alors ingérables.

Le but de l'invention est de réaliser une nouvelle antenne multifaisceaux en configuration MFPB comportant un réseau constitué de sources compactes, l'antenne ne comportant pas les inconvénients des antennes existantes, permettant de s'affranchir de l'utilisation de BFN orthogonaux pour l'élaboration de faisceaux adjacents, et permettant d'obtenir un grand nombre de faisceaux fins contigus ayant une ouverture angulaire comprise entre 0,2° et 0,4°, avec un bon recouvrement des zones de couverture au sol, appelées spots, correspondant à chaque faisceau.

Pour cela, l'invention concerne une antenne multifaisceaux à plusieurs sources par faisceau comportant au moins un réflecteur et un réseau de plusieurs sources illuminant le réflecteur, les sources étant associées en plusieurs groupes décalés les uns par rapport aux autres selon deux directions X, Y d'un plan placé au foyer du réflecteur, chaque groupe comportant un même nombre de sources, comme défini dans la revendication 1. Chaque source comporte un polariseur relié à un élément rayonnant et deux diplexeurs respectivement intégrés dans deux voies de sortie du polariseur, chaque diplexeur comportant deux ports de sortie, les quatre ports de sortie des deux diplexeurs formant quatre ports de la source, les quatre ports fonctionnant dans quatre couleurs différentes, chaque couleur étant définie par un couple de valeurs de fréquence et de polarisation. Toutes les sources appartenant à un même groupe comportent des premiers ports ayant une même première couleur, ou des seconds ports ayant une même deuxième couleur, reliés ensembles pour former un premier faisceau et des troisièmes ports ayant une même troisième couleur, ou des quatrièmes ports ayant une même quatrième couleur, reliés ensembles pour former un deuxième faisceau.

Avantageusement, les groupes sont régulièrement espacés d'un premier pas L1 selon la direction X et d'un deuxième pas L2 selon la direction Y, les pas L1 et L2 correspondant à une ou plusieurs sources, deux groupes adjacents selon la direction X partageant au moins une source en commun.

Avantageusement, deux groupes adjacents selon la direction Y ne partagent aucune source en commun.

Avantageusement, l'antenne comporte, pour chaque groupe de sources, des circuits de distribution reliant toutes les sources d'un même groupe entre elles, selon les directions X et Y, les liaisons étant réalisées entre les premiers ports ayant une même première couleur et entre les troisièmes ports ayant une même troisième couleur, ou entre les seconds ports ayant une même deuxième couleur et entre les quatrièmes ports ayant une même quatrième couleur.

Avantageusement, chaque faisceau est formé par des circuits de distribution dédiés à ce faisceau et indépendants des circuits de distribution dédiés à la formation de tout autre faisceau.

Selon un mode de réalisation particulier, les sources peuvent être associées par groupe de quatre sources adjacentes selon les directions X et Y, et deux groupes consécutifs peuvent être espacés d'un premier pas L1 correspondant à une source selon la direction X et d'un deuxième pas L2 correspondant à deux sources selon la direction Y. Dans ce cas, pour chaque groupe de quatre sources adjacentes, les premiers ports, ou les deuxièmes ports, sont reliés deux à deux selon la direction X par un premier niveau de circuits de distribution puis reliés deux à deux selon la direction Y par un deuxième niveau de circuits de distribution et les troisièmes ports, ou les quatrièmes ports, sont reliés deux à deux selon la direction X par un premier niveau de circuits de distribution, puis reliés deux à deux selon la direction Y par un deuxième niveau de circuits de distribution.

Avantageusement, deux groupes adjacents espacés du premier pas L1 selon la direction X peuvent comporter deux sources en commun, et dans ce cas, pour le premier des deux groupes adjacents, les premiers ports des sources du premier groupe, respectivement les troisièmes ports des sources du premier groupe, sont reliés quatre à quatre selon les directions X et Y et pour le second des deux groupes adjacents, les seconds ports des sources du deuxième groupe, respectivement les quatrièmes ports des sources du deuxième groupe, sont reliés quatre à quatre selon les directions X et Y.

L'invention concerne aussi un système de deux antennes multifaisceaux à plusieurs sources par faisceau, la première antenne fonctionnant à l'émission et la deuxième antenne fonctionnant à la réception.

L'invention concerne enfin un système de télécommunication par satellite comportant au moins une telle antenne multifaisceaux à plusieurs sources par faisceau.

D'autres particularités et avantages de l'invention apparaîtront clairement dans la suite de la description donnée à titre d'exemple purement illustratif et non limitatif, en référence aux dessins schématiques annexés qui représentent :
- figure 1 : un schéma en coupe longitudinale d'un exemple de source radiofréquence compacte à quatre ports correspondant à quatre couleurs différentes, selon l'invention;
- figures 2a et 2b : deux schémas, respectivement en perspective et en coupe, d'un exemple d'antenne multifaisceaux en configuration MFPB, selon l'invention ;
- figure 3 : un schéma d'un exemple de couverture au sol réalisée par une antenne multifaisceaux, selon l'invention ;
- figure 4a : un schéma d'un exemple de regroupement des sources du réseau rayonnant par groupes de sept, chaque groupe participant à l'élaboration d'un faisceau, selon l'invention ;
- figure 4b: un schéma d'un exemple de regroupement des sources du réseau rayonnant par groupes de quatre, les sources n'étant pas représentées pour simplifier le schéma, chaque groupe participant à l'élaboration d'un faisceau, selon l'invention ;
- figure 5 : un schéma illustrant un premier niveau de combinaison des ports des sources d'une antenne, selon l'invention ;
- figure 6 : un schéma illustrant un deuxième niveau de combinaison des ports des sources d'une antenne, selon l'invention ;

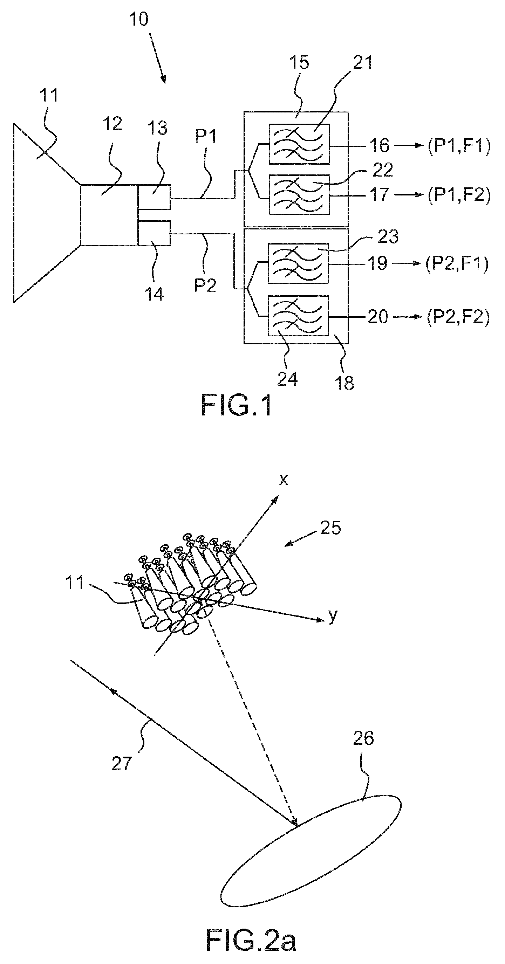

La figure 1 représente un schéma en coupe longitudinale d'un exemple de source radiofréquence compacte à quatre ports correspondant à quatre couleurs différentes, selon l'invention. La source 10 est constituée d'un élément rayonnant 11 par exemple de type cornet et d'une chaîne radiofréquence connectée au cornet 11. La chaîne radiofréquence comporte un polariseur 12 connecté au cornet 11 de la source 10, le polariseur 12 ayant une première 13 et une deuxième 14 voies de sortie à polarisations P1, P2 orthogonales entre elles et fonctionnant dans une même bande de fréquence DF. Les polarisations P1, P2 peuvent être par exemple linéaires ou circulaires. La première voie de sortie 13 du polariseur 12 est connectée à un premier diplexeur compact 15 monté à l'intérieur de la première voie de sortie 13 du polariseur 12, le premier diplexeur 15 comportant deux ports de sortie 16, 17 de même polarisation et découplés en fréquence de façon à fonctionner dans deux couleurs différentes, une couleur étant définie par un couple de valeurs de fréquence et de polarisation. De même, la deuxième voie de sortie 14 du polariseur 12 est connectée à un deuxième diplexeur 18 compact monté à l'intérieur de la deuxième voie de sortie 14 du polariseur 12, le deuxième diplexeur 18 comportant deux ports de sortie 19, 20 de même polarisation, orthogonale à celle des deux ports de sortie 16, 17 du premier diplexeur, et découplés en fréquence de façon à fonctionner dans deux couleurs différentes. Les deux ports de sortie 16, 17 du premier diplexeur 15 et les deux ports de sortie 19, 20 du deuxième diplexeur 18 forment quatre ports de la source radiofréquence 10 correspondant à quatre couleurs différentes. les quatre ports 16, 17, 19, 20 de la source 10 sont intégrés dans une maille correspondant au diamètre du cornet rayonnant 11. Avantageusement, le premier diplexeur 15 comporte deux filtres de bande 21, 22 divisant la bande de fréquence DF de la première voie de sortie 13 du polariseur 12 en deux sous-bandes de fréquence DF1, DF2 disjointes, de même largeur, et centrées respectivement sur deux fréquences de fonctionnement différentes F1, F2. Les deux bandes de fréquences DF1, DF2 sont transmises respectivement sur les deux ports de sortie 16, 17 du premier diplexeur 15 qui fonctionnent donc dans les deux fréquences différentes F1, F2. Les deux sous-bandes de fréquences DF1, DF2 sont séparées par une bande de garde DG de façon à découpler, en fréquence, les deux ports de sortie 16, 17 du premier diplexeur 15. Par conséquent, la bande de fréquence DF est égale à la somme des bandes DF1+DF2+DG.

De même, le deuxième diplexeur 18 comporte deux filtres de bande 23, 24 centrés sur les mêmes fréquences de fonctionnement F1, F2 et filtrant les mêmes bandes de fréquence DF1, DF2 que les deux filtres de bande 21, 22 du premier diplexeur 15. Les deux bandes de fréquences DF1, DF2 sont transmises respectivement sur les deux ports de sortie 19, 20 du deuxième diplexeur 18 qui fonctionnent donc dans les deux fréquences différentes F1, F2 et sont donc découplés en fréquence. Les deux ports 16, 17 du premier diplexeur 15 fonctionnent donc dans la polarisation P1 et respectivement dans les fréquences F1 et F2 et les deux ports 19, 20 du deuxième diplexeur 18 fonctionnent dans la polarisation P2 et respectivement dans les fréquences F1 et F2. Les quatre ports 16, 17, 19, 20 de la source 10 fonctionnent donc respectivement dans quatre couleurs différentes correspondant aux quatre couples de valeurs de fréquence et de polarisation suivantes (F1,P1), (F2, P1), (F1,P2), (F2, P2) et sont intégrés dans une maille correspondant au diamètre d'un élément rayonnant, par exemple de type cornet. Cette source compacte utilisée dans une antenne permet de s'affranchir des contraintes d'orthogonalité des lois de formation des faisceaux en utilisant des circuits de distribution indépendants dédiés à chaque couleur et donc à chaque faisceau.

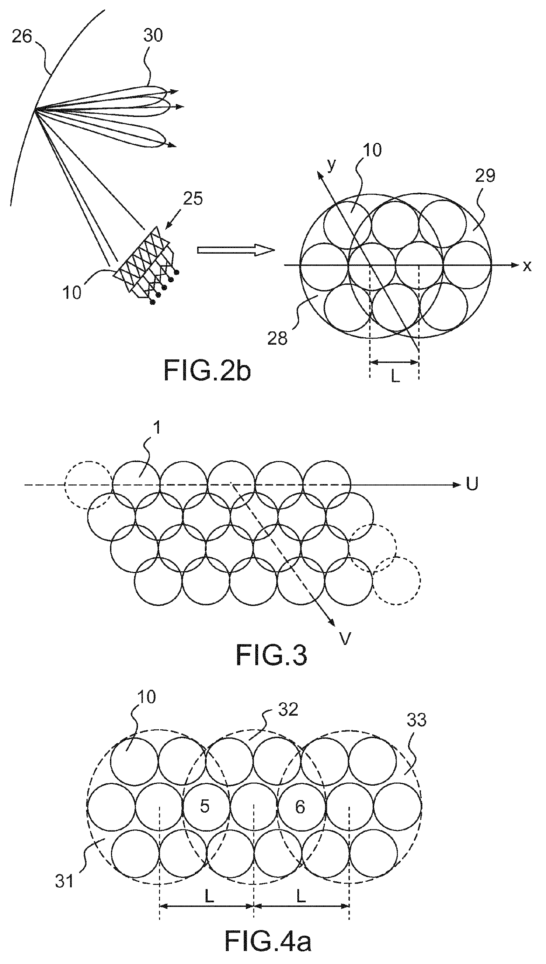

Les figures 2a et 2b représentent deux schémas, respectivement en perspective et en coupe, d'un exemple d'antenne multifaisceaux en configuration MFPB, selon l'invention. Différentes configurations optiques de l'antenne sont possibles, par exemple Grégorienne ou Cassegrain ou autre, et notamment l'antenne peut comporter un ou deux réflecteurs associés à un réseau rayonnant. Sur les figures 2a et 2b, l'antenne comporte un réflecteur 26 et un réseau rayonnant 25 placé dans le plan focal du réflecteur 26, le réseau rayonnant 25 comportant une pluralité de sources radiofréquence 10, par exemple de type cornet 1, organisées selon deux directions X et Y d'un plan. Chaque source radiofréquence est une source compacte à quatre ports de couleurs différentes comme décrit en liaison avec la figure 1. L'antenne pointe dans une direction de pointage 27 vers une zone de couverture au sol choisie, par exemple une région, un pays, un ensemble de plusieurs pays, un continent, ou un autre territoire. L'antenne peut être dédiée soit à l'émission de faisceaux fins contigus 30, soit à la réception de faisceaux fins contigus 30, et permet d'assurer l'ensemble de la couverture souhaitée, en émission ou en réception, dans deux dimensions U, V de l'espace. Une seule antenne, fonctionnant par exemple en émission, permet d'assurer une couverture complète selon les deux dimensions U et V de l'espace. Pour réaliser les fonctions d'émission et de réception, il est nécessaire d'utiliser un système de deux antennes en configuration MFPB, une première antenne fonctionnant à l'émission et une deuxième antenne fonctionnant à la réception.

A titre d'exemple non limitatif, la figure 3 illustre un exemple de couverture réalisée par l'antenne, selon l'invention. Cette figure montre que selon les directions U et V de l'espace, les spots 1 réalisés au sol par l'antenne se touchent avec un léger recouvrement entre deux spots 1 adjacents et ne présentent aucun trou de couverture. Chaque faisceau 30 émis ou reçu par l'antenne, correspondant à un spot 1 au sol, est formé par combinaison des signaux issus d'un groupe de plusieurs sources 10 adjacentes, par exemple quatre ou sept sources adjacentes, disposées en matrice 2*2. Deux groupes consécutifs adjacents partagent au moins une source en commun et chaque source participe donc à l'élaboration de plusieurs faisceaux. Sur la figure 2b, les sources 10 sont regroupées par sept, deux groupes adjacents 28, 29 étant décalés d'un pas L correspondant à une source et partagent quatre sources en commun. La figure 4a illustre un deuxième exemple de regroupement des sources 10 du réseau rayonnant par groupes 31, 32, 33 de sept sources 10, chaque groupe formant un faisceau, deux groupes adjacents 31, 32 étant décalés selon la direction X d'un pas L correspondant à deux sources. Les deux groupes consécutifs adjacents 31, 32 partagent une source 5 en commun, les deux groupes consécutifs adjacents 32, 33 partagent une source 6 en commun.

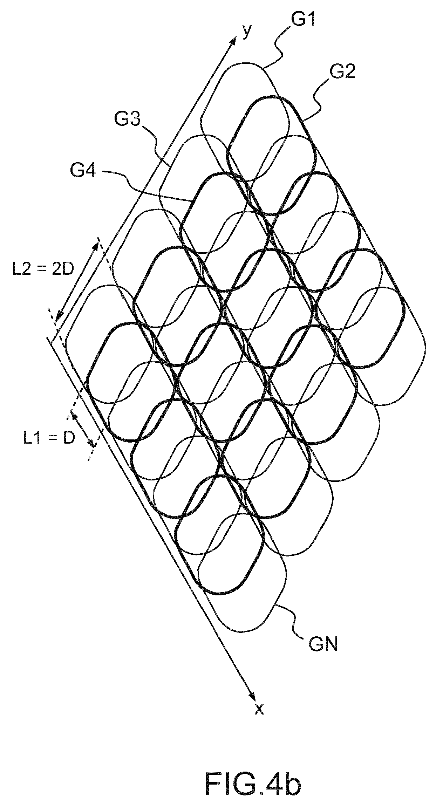

La figure 4b illustre un troisième exemple de regroupement des sources 10 quatre par quatre. Chaque groupe G1, G2, G3, G4, ..., GN est constitué de quatre sources 10, non représentées sur la figure 4b pour simplifier le schéma, les deux groupes adjacents G1, G2 étant décalés d'un premier pas L1 correspondant à l'encombrement d'une source selon la première direction X de l'antenne et les deux groupes adjacents G1, G3 étant décalés d'un deuxième pas L2 correspondant à l'encombrement de deux sources 10 selon la deuxième direction Y de l'antenne. Sur l'exemple de la figure 4b, le pas L1 est égal au diamètre D d'une source radiofréquence 10 et le pas L2 est égal au diamètre 2D de deux sources radiofréquence. Ainsi, selon la direction X, les deux groupes G1, G2 de quatre sources radiofréquence qui participent à la formation de faisceaux adjacents partagent deux sources en commun alors que selon la direction Y, les deux groupes G1, G3 de quatre sources radiofréquence qui participent à la formation de faisceaux adjacents ne comportent aucune source en commun. Dans cet exemple de réalisation de l'invention, le partage des sources radiofréquence entre deux groupes adjacents n'est donc réalisé que dans une seule direction X de l'antenne. D'autres modes de regroupement des sources sont possibles. De même, le nombre de sources en partage peut être différent selon les directions X et Y.

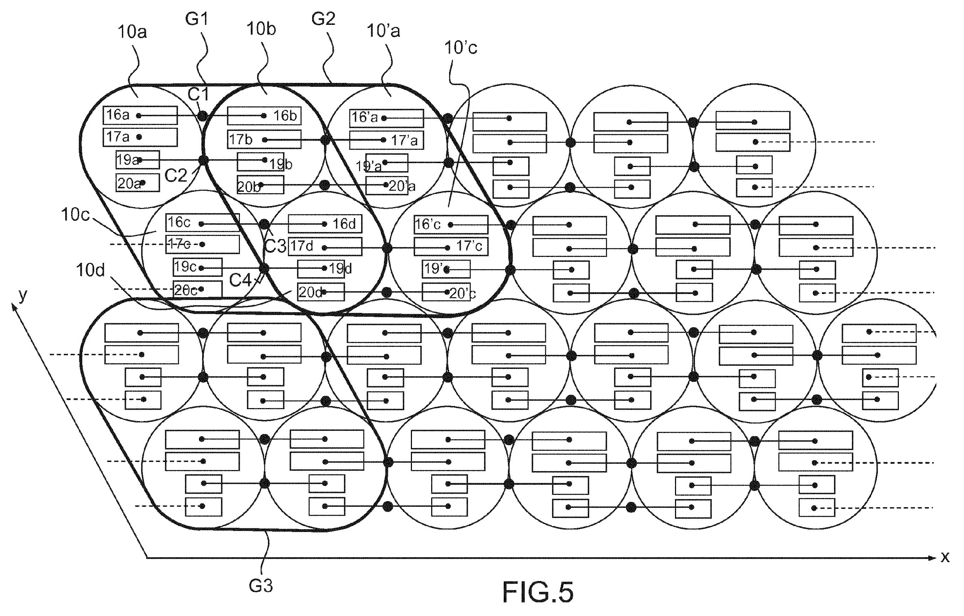

Les faisceaux formés par l'antenne sont élaborés par un formateur de faisceaux comportant des circuits de distributions reliant, pour chaque groupe de sources, les ports ayant une même première couleur, c'est-à-dire la même fréquence et la même polarisation, pour former un premier faisceau et les ports ayant une même troisième couleur pour former un deuxième faisceau. Chaque groupe de sources participe donc à la formation de deux faisceaux différents. Ainsi, pour chaque groupe de sources radiofréquence, le dispositif de formation de faisceaux comporte des circuits de distribution C1 à C4, D1, D2, répartis sur deux niveaux, chaque faisceau étant formé par des circuits de distribution dédiés. Les circuits de distribution dédiés à la formation de faisceaux différents sont indépendants des circuits de distribution dédiés à la formation de tout autre faisceau. Les circuits de distribution de chaque niveau ne comportent que des guides d'onde qui fonctionnent soit en combineurs de signaux soit en diviseurs de signaux selon que l'antenne est une antenne d'émission ou une antenne de réception. Aucun coupleur n'est nécessaire. Un exemple de premier niveau de distribution est représenté sur la figure 5. Dans cet exemple, le premier niveau de distribution comporte, pour chaque groupe de quatre sources radiofréquence, deux premiers circuits de distribution C1, C2 reliant deux sources radiofréquence 10a, 10b adjacentes selon la direction X, et deux premiers circuits de distribution C3, C4 reliant deux sources radiofréquence 10c, 10d adjacentes selon la direction X, donc quatre premiers circuits de distribution C1 à C4 par groupe de quatre sources radiofréquence 10a, 10b, 10c, 10d. Les premiers circuits de distribution C1, C2 relient, deux à deux et selon la direction X, deux premiers ports 16a, 16b et deux troisièmes ports 19a, 19b, des deux premières et secondes sources 10a, 10b adjacentes d'un même groupe G1 de quatre sources. Les deux premiers ports 16a, 16b reliés ont la même polarisation P1 et la même fréquence de fonctionnement F1, donc la même couleur, les deux troisièmes ports 19a, 19b reliés, ont la même polarisation P2 et la même fréquence de fonctionnement F1, donc la même couleur. De même, les premiers circuits de distribution C3, C4 relient, deux à deux et selon la direction X, deux premiers ports 16c, 16d et deux troisièmes ports 19c, 19d, de deux troisième et quatrième sources 10c, 10d adjacentes du même groupe G1 de quatre sources. Les deux premiers ports 16c, 16d reliés ont la même polarisation P1 et la même fréquence F1 de fonctionnement, donc la même couleur, les deux troisièmes ports 19c, 19d reliés, ont la même polarisation P2 et la même fréquence F1 de fonctionnement donc la même couleur.

Chaque source 10a à 10d comportant quatre ports, à l'issue de la combinaison réalisée entre les premiers ports 16a, 16b, respectivement 19a, 19b, reliés à deux sources adjacentes 10a, 10b du premier groupe G1 de quatre sources, les deux sources 10a, 10b comportent chacune un second port 17a, 17b et un quatrième port 20a, 20b libres qui peuvent à leur tour être respectivement reliés, selon la direction X, à un second port et à un quatrième port d'une source adjacente appartenant à un deuxième groupe G2 de quatre sources décalé du premier groupe G1 d'un pas L1 correspondant à une source. Par exemple, sur la figure 5, les quatre sources du deuxième groupe G2 sont les sources 10b, 10'a, 10d, 10'c. Les seconds et quatrièmes ports 17b et 20b de la source 10b sont respectivement reliés avec les seconds et quatrièmes ports 17'a et 20'a de la source 10'a et les seconds et quatrièmes ports 17d et 20d de la source 10d sont respectivement reliés aux seconds et quatrièmes ports 17'c et 20'c de la source 10'c. Les liaisons entre deux ports respectifs de deux sources adjacentes sont réalisées de la même façon pour l'ensemble des groupes de quatre sources jusqu'aux bords du réseau rayonnant. Les sources situées sur les bords du réseau rayonnant de l'antenne n'ont qu'une seule source adjacente et comportent chacune deux ports 17a, 20a qui demeurent libres.

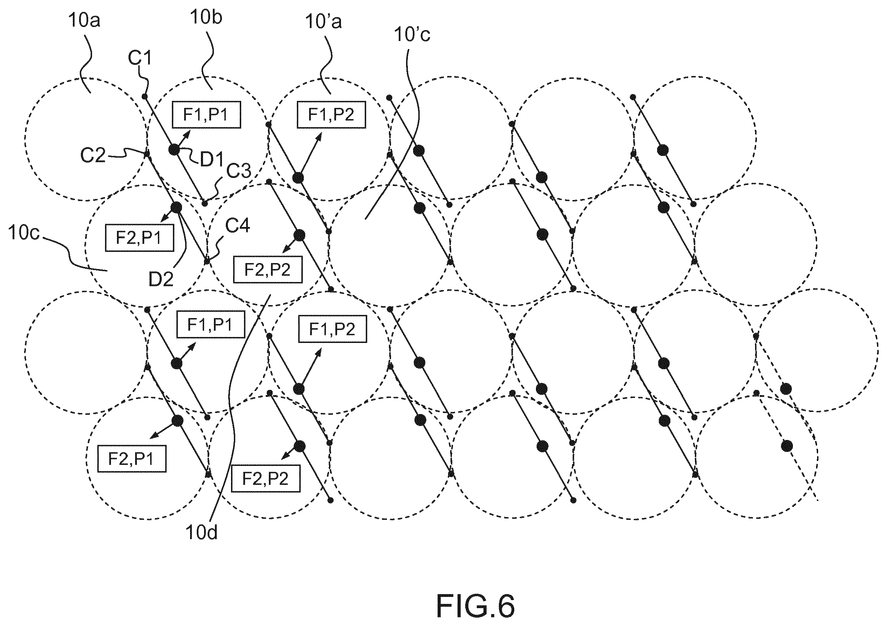

Un exemple de second niveau de distribution est représenté sur la figure 6. Le second niveau de distribution comporte des seconds circuits de distribution D1, D2 qui relient respectivement, deux à deux et selon la direction Y, pour chaque groupe G1 de quatre sources radiofréquence 10a, 10b, 10c, 10d, d'une part, les deux premiers ports 16a, 16b des première et seconde sources 10a, 10b reliés selon la direction X avec les deux premiers ports 16c, 16d des troisième et quatrième sources radiofréquence reliés selon la direction X et d'autre part, les deux troisièmes ports 19a, 19b des première et seconde sources radiofréquence 10a, 10b reliés selon la direction X avec les deux troisièmes ports 19c, 19d des troisième et quatrième sources radiofréquence 10c, 10d reliés selon la direction X. La sortie du distributeur D1 est un port formant un spot de fréquence F1 et de polarisation P1 et la sortie du distributeur D2 est un port formant un spot de fréquence F1 et de polarisation P2. De même, pour chaque groupe de quatre sources, tous les ports de même fréquence et de même polarisation reliés deux à deux par les premiers distributeurs du premier niveau de distribution sont reliés entre eux par un distributeur du deuxième niveau de façon à élaborer tous les spots de l'antenne.

Cette configuration d'antenne permet de relier ensembles, de deux façons différentes, les sources d'un même groupe, de réaliser ainsi deux faisceaux adjacents dans deux couleurs différentes par groupe de sources et donc de doubler le nombre de faisceaux réalisés par une même antenne. Cela permet d'obtenir, avec une seule antenne, un bon recouvrement des spots correspondants réalisés au sol. En outre, la formation de chaque faisceau est réalisée de manière simple par des circuits de distribution dédiés, indépendants des circuits de distribution utilisés pour la formation des autres faisceaux.

Une couverture complète en émission et en réception est obtenue en utilisant un système de deux antennes de mêmes dimensions, la première antenne fonctionnant à l'émission et la deuxième antenne fonctionnant à la réception.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, le nombre de sources par faisceau et le nombre de sources en partage entre deux faisceaux adjacents peut être différent de ce qui est explicitement décrit dans les exemples de réalisation.

## Revendications

1. Antenne multifaisceaux à plusieurs sources par faisceau comportant au moins un réflecteur (26) et un réseau de plusieurs sources (10, 10a, 10b, 10c, 10d, 10'a, 10'c) illuminant le réflecteur (26), les sources (10, 10a, 10b, 10c, 10d, 10'a, 10'c) étant associées en plusieurs groupes (G1, G2, G3,..., GN) décalés les uns par rapport aux autres selon deux directions X, Y d'un plan placé au foyer du réflecteur, chaque groupe comportant un même nombre de sources, **caractérisée en ce que** chaque source (10, 10a, 10b, 10c, 10d, 10'a, 10'c) comporte un polariseur (12) relié à un élément rayonnant (11) et deux diplexeurs (15, 18) respectivement intégrés dans deux voies de sortie (13, 14) du polariseur, chaque diplexeur comportant deux ports de sortie, les quatre ports de sortie des deux diplexeurs formant quatre ports (16, 17, 19, 20) de la source, les quatre ports fonctionnant dans quatre couleurs différentes, chaque couleur étant définie par un couple de valeurs de fréquence et de polarisation (F1, P1), (F1, P2), (F2, P1), (F2, P2) et **en ce que**, toutes les sources appartenant à un même groupe (G1 à GN) comportent des premiers ports (16) ayant une même première couleur (P1, F1) reliés ensembles par des premiers circuits de distribution dédiés (C1, C3, D1) pour former un premier faisceau et des troisièmes ports (19) ayant une même troisième couleur (P2, F1) reliés ensembles par des seconds circuits de distribution dédiés (C2, C4, D2) pour former un deuxième faisceau, les deuxième et quatrième ports correspondant à la deuxième et quatrième couleur de chaque source du groupe étant aptes à être reliés aux ports correspondants des sources d'un groupe adjacent.

2. Antenne multifaisceaux selon la revendication 1, **caractérisée en ce que** les groupes sont régulièrement espacés d'un premier pas L1 selon la direction X et d'un deuxième pas L2 selon la direction Y, les pas L1 et L2 correspondant à une ou plusieurs sources, deux groupes adjacents (G1, G2) selon la direction X partageant au moins une source en commun.

3. Antenne multifaisceaux selon la revendication 2, **caractérisée en ce que** deux groupes adjacents (G1, G3) selon la direction Y ne partagent aucune source en commun.

4. Antenne multifaisceaux selon la revendication 1, **caractérisée en ce qu'**elle comporte, pour chaque groupe (G1 à GN) de sources, des circuits de distribution (C1, C3, D1), (C2, C4, D2) reliant toutes les sources d'un même groupe entre elles, selon les directions X et Y, les liaisons étant réalisées entre les premiers ports (16) ayant une même première couleur (P1, F1) et entre les troisièmes ports (19) ayant une même troisième couleur (P2, F1), ou entre les seconds ports (17) ayant une même deuxième couleur (P1, F2) et entre les quatrièmes ports (20) ayant une même quatrième couleur (P2, F2).

5. Antenne multifaisceaux selon la revendication 4, **caractérisée en ce que** chaque faisceau est formé par des circuits de distribution dédiés à ce faisceau et indépendants des circuits de distribution dédiés à la formation de tout autre faisceau.

6. Antenne multifaisceaux selon la revendication 3, **caractérisée en ce que** :
- les sources (10) sont associées par groupe de quatre sources adjacentes (10a, 10b, 10c, 10d) selon les directions X et Y, deux groupes consécutifs (G1, G2) (G1, G3) étant espacés d'un premier pas L1 correspondant à une source selon la direction X et d'un deuxième pas L2 correspondant à deux sources selon la direction Y,
- pour chaque groupe (G1 à GN) de quatre sources adjacentes (10a à 10d), les premiers ports (16a à 16d), ou les deuxièmes ports (17a à 17d), sont reliés deux à deux selon la direction X par un premier niveau de circuits de distribution (C1, C3) puis reliés deux à deux selon la direction Y par un deuxième niveau de circuits de distribution (D1) et les troisièmes ports (19a à 19d), ou les quatrièmes ports (20a à 20d), sont reliés deux à deux selon la direction X par un premier niveau de circuits de distribution (C2, C4), puis reliés deux à deux selon la direction Y par un deuxième niveau de circuits de distribution (D2).

7. Antenne multifaisceaux selon la revendication 6, **caractérisée en ce que** deux groupes adjacents (G1, G2) espacés du premier pas L1 selon la direction X comportent deux sources en commun (10b, 10d), **en ce que** pour le premier (G1) des deux groupes adjacents, les premiers ports (16a à 16d) des sources (10a à 10d) du premier groupe (G1), respectivement les troisièmes ports (19a à 19d) des sources (10a à 10d) du premier groupe (G1), sont reliés quatre à quatre selon les directions X et Y et **en ce que** pour le second (G2) des deux groupes adjacents, les seconds ports (17b, 17'a, 20d, 20'c) des sources (10b, 10'a, 10d, 10'c) du deuxième groupe (G2), respectivement les quatrièmes ports (20b, 20'a, 20d, 20'c) des sources (10b, 10'a, 10d, 10'c) du deuxième groupe (G2), sont reliés quatre à quatre selon les directions X et Y.

8. Système d'antennes d'émission et de réception multifaisceaux, **caractérisé en ce qu'**il comporte une première antenne et une deuxième antenne multifaisceaux selon l'une des revendications 1 à 7, la première antenne fonctionnant à l'émission et la deuxième antenne fonctionnant à la réception.

9. Système de télécommunication par satellite **caractérisé en ce qu'**il comporte au moins une antenne multifaisceaux selon l'une des revendications 1 à 7.

## Patentansprüche

1. Mehrfachstrahlantenne mit mehreren Quellen pro Strahl, umfassend mindestens einen Reflektor (26) und ein Netz von mehreren Quellen (10, 10a, 10b, 10c, 10d, 10'a, 10'c), die den Reflektor (26) anstrahlen, wobei die Quellen (10, 10a, 10b, 10c, 10d, 10'a, 10'c) in mehreren Gruppen (G1, G2, G3,..., GN) zusammengeschlossen sind, wobei die einen in Bezug auf die anderen in zwei Richtungen X, Y einer Ebene verschoben sind, die in dem Brennpunkt des Reflektors platziert ist, wobei jede Gruppe eine gleiche Anzahl von Quellen umfasst, **dadurch gekennzeichnet, dass** jede Quelle (10, 10a, 10b, 10c, 10d, 10'a, 10'c) einen Polarisator (12), der mit einem Strahlungselement (11) verbunden ist und zwei Diplexer (15, 18) umfasst, die jeweils in zwei Ausgangskanälen (13, 14) des Polarisators platziert sind, wobei jeder Diplexer zwei Ausgangsports umfasst, wobei die vier Ausgangsports der zwei Diplexer vier Ports (16, 17, 19, 20) der Quelle bilden, wobei die vier Ports in vier unterschiedlichen Farben funktionieren, wobei jede Farbe durch ein Paar von Frequenz- und Polarisationswerten (F1, P1), (F1, P2), (F2, P1), (F2, P2) definiert wird und dadurch, dass alle Quellen, die zur gleichen Gruppe (G1 bis GN) gehören, erste Ports (16), die eine gleiche erste Farbe (P1, F1) aufweisen und miteinander durch erste spezielle Verteilungsstromkreise (C1, C3, D1) verbunden sind, um einen ersten Strahl zu bilden und dritte Ports (19) umfassen, die eine gleiche dritte Farbe (P2, F1) aufweisen und miteinander durch zweite spezielle Verteilungsstromkreise (C2, C4, D2) verbunden sind, um einen zweiten Strahl zu bilden, wobei die zweiten und vierten Ports der zweiten und vierten Farbe von jeder Quelle der Gruppe entsprechen und dazu in der Lage sind, mit den entsprechenden Ports der Quellen einer benachbarten Gruppe verbunden zu werden.

2. Mehrfachstrahlantenne nach Anspruch 1, **dadurch gekennzeichnet, dass** die Gruppen von einem ersten Schritt L1 in der X-Richtung und einem zweiten Schritt L2 in der Y-Richtung regelmäßig beabstandet sind, wobei die Schritte L1 und L2 einer oder mehreren Quellen entsprechen, wobei zwei benachbarte Gruppen (G1, G2) in der X-Richtung mindestens eine Quelle gemeinsam haben.

3. Mehrfachstrahlantenne nach Anspruch 2, **dadurch gekennzeichnet, dass** zwei benachbarte Gruppen (G1, G3) in der Y-Richtung keine Quelle gemeinsam haben.

4. Mehrfachstrahlantenne nach Anspruch 1, **dadurch gekennzeichnet, dass** sie für jede Gruppe (G1 bis GN) von Quellen Verteilungsstromkreise (C1, C3, D1), (C2, C4, D2) umfasst, die alle Quellen einer gleichen Gruppe in den X- und Y-Richtungen miteinander verbinden, wobei die Verbindungen zwischen den ersten Ports (16), die eine gleiche erste Farbe (P1, F1) aufweisen und zwischen den dritten Ports (19), die eine gleiche dritte Farbe (P2, F1) aufweisen oder zwischen den zweiten Ports (17), die eine gleiche zweite Farbe (P1, F2) aufweisen und zwischen den vierten Ports (20), die eine gleiche vierte Farbe (P2, F2) aufweisen, umgesetzt werden.

5. Mehrfachstrahlantenne nach Anspruch 4, **dadurch gekennzeichnet, dass** jeder Strahl durch Verteilungsstromkreise, die diesem Strahl gewidmet sind, und unabhängig von den Verteilungsstromkreisen, die der Bildung von jedem anderen Strahl gewidmet sind, gebildet wird.

6. Mehrfachstrahlantenne nach Anspruch 3, **dadurch gekennzeichnet, dass**:
- die Quellen (10) in Gruppen von vier benachbarten Quellen (10a, 10b, 10c, 10d) in dens X- und Y-Richtungen zusammengeschlossen sind, wobei zwei aufeinanderfolgende Gruppen (G1, G2) (G1, G3) um einen ersten Schritt L1, der einer Quelle in der X-Richtung entspricht und einen zweiten Schritt L2, der zwei Quellen in der Y-Richtung entspricht, beabstandet sind,
- für jede Gruppe (G1 bis GN) von vier benachbarten Quellen (10a bis 10d) die ersten Ports (16a bis 16d) oder die zweiten Ports (17a bis 17d) in der X-Richtung durch eine erste Ebene von Verteilungsstromkreisen (C1, C3) paarweise miteinander verbunden sind und anschließend in der Y-Richtung durch eine zweite Ebene von Verteilungsstromkreisen (D1) paarweise verbunden sind und die dritten Ports (19a bis 19d) oder die vierten Ports (20a bis 20d) in der X-Richtung durch eine erste Ebene von Verteilungsstromkreisen (C2, C4) paarweise verbunden sind und anschließend in der Y-Richtung durch eine zweite Ebene von Verteilungsstromkreisen (D2) paarweise verbunden sind.

7. Mehrfachstrahlantenne nach Anspruch 6, **dadurch gekennzeichnet, dass** zwei benachbarte Gruppen (G1, G2), die von dem ersten Schritt L1 in der X-Richtung beabstandet sind, zwei gemeinsame Quellen (10b, 10d) umfassen, dadurch, dass für die erste (G1) der zwei benachbarten Gruppen, die ersten Ports (16a bis 16d) der Quellen (10a bis 10d) der ersten Gruppe (G1) beziehungsweise die dritten Ports (19a bis 19d) der Quellen (10a bis 10d) der ersten Gruppe (G1) zu viert in den X- und Y-Richtungen verbunden sind und dadurch, dass für die zweite (G2) der zwei benachbarten Gruppen, die zweiten Ports (17b, 17'a, 20d, 20'c) der Quellen (10b, 10'a, 10d, 10'c) der zweiten Gruppe (G2) beziehungsweise die vierten Ports (20b, 20'a, 20d, 20'c) der Quellen (10b, 10'a, 10d, 10'c) der zweiten Gruppe (G2) zu viert in den X- und Y-Richtungen verbunden sind.

8. Mehrfachstrahl-Sende- und Empfangsantennen-System, **dadurch gekennzeichnet, dass** es eine erste Mehrfachstrahlantenne und eine zweite Mehrfachstrahlantenne nach einem der Ansprüche 1 bis 7 umfasst, wobei die erste Antenne zum Senden und die zweite Antenne zum Empfangen funktioniert.

9. Satellitentelekommunikationssystem, **dadurch gekennzeichnet, dass** es mindestens eine Mehrfachstrahlantenne nach einem der Ansprüche 1 bis 7 umfasst.

## Claims

1. Multibeam antenna having a plurality of sources per beam comprising at least one reflector (26) and a network of a plurality of sources (10, 10a, 10b, 10c, 10d, 10'a, 10'c) which illuminate the reflector (26), the sources (10, 10a, 10b, 10c, 10d, 10'a, 10'c) being associated in a plurality of groups (G1, G2, G3,... GN) which are offset relative to each other in two directions X, Y from a plane which is placed at the focal point of the reflector, each group comprising the same number of sources, **characterised in that** each source (10, 10a, 10b, 10c, 10d, 10'a, 10'c) comprises a polariser (12) which is connected to a radiating element (11) and two diplexers (15, 18) which are integrated in two output paths (13, 14) of the polariser, respectively, each diplexer comprising two output ports, the four output ports of the two diplexers forming four ports (16, 17, 19, 20) of the source, the four ports operating in four different colours, each colour being defined by a pair of frequency and polarisation values (F1, P1), (F1, P2), (F2, P1), (F2, P2), and **in that** all the sources belonging to the same group (G1 to GN) comprise first ports (16) which have the same first colour (P1, F1) which are connected together by means of first dedicated distribution circuits (C1, C3, D1) in order to form a first beam and third ports (19) which have the same third colour (P2, F1) which are connected together by means of second dedicated distribution circuits (C2, C4, D2) in order to form a second beam, the second and fourth ports corresponding to the second and fourth colour of each source of the group being capable of being connected to the corresponding ports of the sources of an adjacent group.

2. Multibeam antenna according to claim 1, **characterised in that** the groups are regularly spaced apart by a first pitch P1 in the direction X and a second pitch L2 in the direction Y, the pitches L1 and L2 corresponding to one or more sources, two adjacent groups (G1, G2) in the direction X sharing at least one source in common.

3. Multibeam antenna according to claim 2, **characterised in that** two adjacent groups (G1, G3) in the Y direction do not share any source in common.

4. Multibeam antenna according to claim 1, **characterised in that** it comprises, for each group (G1 to GN) of sources, distribution circuits (C1, C3, D1), (C2, C4, D2) which connect all the sources of the same group together, in the X and Y directions, the connections being produced between the first ports (16) which have the same first colour (P1, F1) and between the third ports (19) which have the same third colour (P2, F1), or between the second ports (17) which have the same second colour (P1, F2) and between the fourth ports (20) which have the same fourth colour (P2, F2).

5. Multibeam antenna according to claim 4, **characterised in that** each beam is formed by distribution circuits which are dedicated to this beam and which are independent of the distribution circuits which are dedicated to the formation of any other beam.

6. Multibeam antenna according to claim 3, **characterised in that**:
- the sources (10) are associated by group of four adjacent sources (10a, 10b, 10c, 10d) in the X and Y directions, two consecutive groups (G1, G2) (G1, G3) being spaced apart by a first pitch L1 which corresponds to a source in the X direction and a second pitch L2 which corresponds to two sources in the Y direction,
- for each group (G1 to GN) of four adjacent sources (10a to 10d), the first ports (16a to 16d) or the second ports (17a to 17d) are connected in pairs in the X direction by a first level of distribution circuits (C1, C3) then connected in pairs in the Y direction by a second level of distribution circuits (D1) and the third ports (19a to 19d) or the fourth ports (20a to 20d) are connected in pairs in the X direction by a first level of distribution circuits (C2, C4), then connected in pairs in the Y direction by a second level of distribution circuits (D2).

7. Multibeam antenna according to claim 6, **characterised in that** two adjacent groups (G1, G2) which are spaced apart by the first pitch L1 in the X direction comprise two sources in common (10b, 10d) and **in that**, for the first (G1) of the two adjacent groups, the first ports (16a to 16d) of the sources (10a to 10d) of the first group (G1) and the third ports (19a to 19d) of the sources (10a to 10d) of the first group (G1) are connected four by four in the X and Y directions, respectively, and **in that**, for the second (G2) of the two adjacent groups, the second ports (17b, 17'a, 20d, 20'c) of the sources (10b, 10'a, 10d, 10'c) of the second group (G2) and the fourth ports (20b, 20'a, 20d, 20'c) of the sources (10b, 10'a, 10d, 10'c) of the second group (G2) are connected four by four in the X and Y directions, respectively.

8. Multibeam transmitting and receiving antenna system, **characterised in that** it comprises a first multibeam antenna and a second multibeam antenna according to any one of claims 1 to 7, the first antenna operating in terms of transmission and the second antenna operating in terms of reception.

9. Satellite telecommunication system, **characterised in that** it comprises at least one multibeam antenna according to any one of claims 1 to 7.
